# DEMANDE DE BREVET EUROPEEN

(11) **EP 4 840 657 A1**
(43) Date de publication de la demande: **18.11.2026**
(21) Numéro de dépôt: 26170140.3
(22) Date de dépôt: 01.04.2026
(51) Int. Cl.: B60H 1/00, B60H 1/24, B60K 35/10, B60K 35/21, B60K 35/22, B60K 35/28

(54) **HABITACLE DE VÉHICULE AUTOMOBILE AVEC SYNCHRONISATION DES AÉRATEURS MOTORISÉS ET DES AMBIANCES LUMINEUSES**

(30) Priorité: 12.05.2025 FR 2504998
(71) Demandeur: Stellantis Auto SAS, 78300 Poissy (FR)
(72) Inventeur: DUMUR, Denis, 78990 Elancourt (FR); JACQUEMARD, Ivan, 92130 Issy Les Moulineaux (FR); GUIDEZ, Frederic, 75015 Paris 15 (FR); PINTAT, Bruno, 92160 Antony (FR); LE DALL, Christophe, 92500 Rueil Malmaison (FR)
(74) Mandataire: BCIP

(57) **Abrégé**

Habitacle (1) de véhicule automobile (3) comprenant au moins un aérateur (11) motorisé adapté pour diffuser dans ledit habitacle (1) un flux d'air pulsé provenant d'un HVAC adapté pour fonctionner au moins dans un mode chauffage et dans un mode climatisation, la directivité du flux d'air dudit au moins un aérateur (11) motorisé étant susceptible d'être pilotée depuis une interface de commande accessible dans ledit habitacle (1), un ensemble de génération d'images adapté pour afficher de façon dynamique des images animées sur au moins une surface intérieure dudit habitacle (1), et un dispositif de synchronisation conçu pour adapter en temps réel lesdites images animées affichées par ledit ensemble de génération d'images en fonction du flux d'air pulsé par ledit au moins aérateur (11).

## Description

### [Domaine technique]

L'invention a trait au domaine des véhicules automobiles, en particulier au domaine du confort thermique au sein de l'habitacle du véhicule automobile.

L'invention concerne plus particulièrement un habitacle comprenant un dispositif de synchronisation adapté pour synchroniser le fonctionnement des aérateurs motorisés avec le fonctionnement du dispositif de génération d'ambiances lumineuses.

### [Etat de la technique antérieure]

Dans un véhicule automobile, l'ambiance perçue par les utilisateurs du véhicule et la sensation de confort et de sécurité qui en résulte sont en partie créées par le rendu esthétique de l'habitacle.

A cet effet, un soin particulier est typiquement apporté à la planche de bord, aux panneaux de porte, au pavillon, etc., que ce soit au niveau des matériaux utilisés ou du design des éléments intégrés dans l'habitacle.

Afin de soigner encore davantage l'esthétique de l'habitacle, et donc d'améliorer la sensation de confort et de sécurité qui en découle, il est également envisagé de façonner le caractère immersif de l'habitacle.

Le caractère immersif de l'habitacle peut, par exemple, être amélioré en tamisant la lumière qui entre dans le véhicule par l'utilisation de vitres teintées, en proposant des ambiances lumineuses particulières dans l'habitacle, etc.

Dans une première réalisation connue de l'art antérieur, l'ambiance lumineuse de l'habitacle est obtenue par l'intermédiaire de sources lumineuses agencées à différents emplacement de l'habitacle et générant, lorsqu'activées, une lumière statique. La couleur de la lumière peut, dans certaines réalisations, être sélectionnée par l'utilisateur via une interface de commande accessible dans l'habitacle.

Dans une deuxième réalisation de l'art antérieur visant à augmenter encore le caractère immersif de l'habitacle, il est envisagé de générer de façon dynamique un flux lumineux dans l'habitacle. A la différence de la première solution, la lumière est ici diffusée de façon dynamique par un ensemble de génération d'images adapté pour afficher de façon dynamique des images animées sur des surfaces de l'habitacle.

La présente invention cherche à parfaire encore davantage le caractère immersif de l'habitacle d'un véhicule.

### [Exposé de l'invention]

La présente invention vise à surmonter les inconvénients précités, et concerne pour ce faire un habitacle de véhicule automobile comprenant :
- au moins un aérateur motorisé adapté pour diffuser dans ledit habitacle un flux d'air pulsé provenant d'un HVAC, ledit HVAC étant adapté pour fonctionner au moins dans un mode chauffage et dans un mode climatisation, la directivité du flux d'air dudit au moins un aérateur motorisé étant susceptible d'être pilotée depuis une interface de commande accessible dans ledit habitacle,
- un ensemble de génération d'images adapté pour afficher de façon dynamique des images animées sur au moins une surface intérieure dudit habitacle,
ledit habitacle étant remarquable en ce qu'il comprend un dispositif de synchronisation conçu pour adapter en temps réel lesdites images animées affichées par ledit ensemble de génération d'images en fonction du flux d'air pulsé par ledit au moins aérateur.

Ainsi, en prévoyant un habitacle comprenant un dispositif de synchronisation conçu pour adapter en temps réel les images animées affichées par l'ensemble de génération d'images en fonction du flux d'air pulsé par les aérateurs, une interaction entre le flux d'air pulsé et les images animées affichées est ainsi générée.

De la sorte, on améliore encore l'effet immersif proposé par le véhicule en ce que l'utilisateur perçoit directement l'impact du flux d'air sur les images animées affichées sur les surfaces de l'habitacle.

Selon des caractéristiques optionnelles de l'habitacle selon l'invention :
- ledit dispositif de synchronisation est conçu pour adapter les images animées affichées par ledit ensemble de génération d'images en fonction de l'orientation et/ou du débit du flux d'air pulsé par ledit au moins aérateur ;
- ledit dispositif de synchronisation est adapté pour agrémenter lesdites images animées affichées de motifs additionnels en fonction du flux d'air pulsé par ledit au moins aérateur ;
- ledit dispositif de synchronisation est adapté pour corréler la couleur desdites images animées affichées en fonction de la température de consigne dudit flux d'air pulsé par ledit au moins aérateur ;
- ledit dispositif de synchronisation est conçu pour adapter lesdites images animées affichées par ledit ensemble de génération d'images en fonction du mode de fonctionnement retenu dudit HVAC ;
- ledit ensemble de génération d'images comporte au moins un projecteur adapté pour projeter des images animées sur une planche de bord et/ou sur une garniture de pavillon et/ou sur des panneaux de porte dudit véhicule ;
- ledit ensemble de génération d'images comporte au moins une matrice de LED portée par une planche de bord et/ou sur une garniture de pavillon et/ou sur des panneaux de porte dudit véhicule ;
- ledit ensemble de génération d'images est adapté pour afficher lesdites images animées sur un écran multifonction agencé dans ledit habitacle.

L'invention concerne également un véhicule automobile comprenant un habitacle et un HVAC, remarquable en ce que ledit habitacle est selon l'invention et en ce que ledit au moins un aérateur est raccordé audit HVAC.

### [Description des dessins]

D'autres caractéristiques, buts et avantages de l'invention apparaîtront à la lecture de la description détaillée qui suit pour la compréhension de laquelle on se reportera aux dessins annexés dans lesquels :

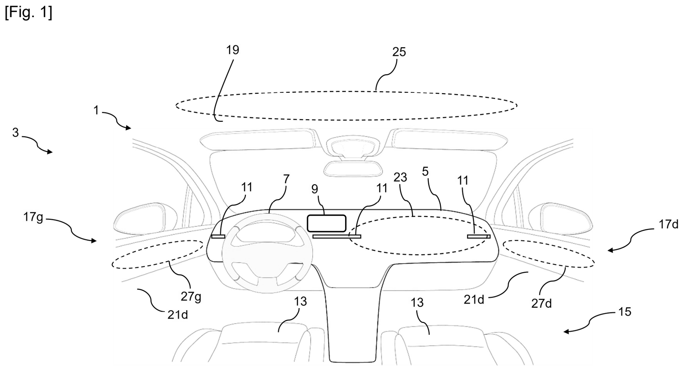

[Fig. 1] montre un habitacle d'un véhicule automobile selon l'invention.

### [Description des modes de réalisation]

Dans la suite de la description, des éléments présentant une structure identique ou des fonctions analogues sont désignés par une même référence.

On se réfère à la figure 1 unique montrant un habitacle 1 d'un véhicule 3 automobile selon l'invention.

L'habitacle 1 comporte une planche de bord 5 s'étendant transversalement relativement au véhicule 3 dans laquelle sont intégrés de nombreux éléments du véhicule, par exemple un volant de direction 7, un écran multifonction 9, des rangements, etc.

La planche de bord 5 supporte en outre des aérateurs 11 permettant de diffuser dans l'habitacle 1 de l'air pulsé provenant d'un système de contrôle et de régulation de la température (non représenté) conçu pour contrôler et réguler la température dans l'habitacle du véhicule et appelé « système de chauffage, de ventilation et de climatisation », désigné par le terme « HVAC », acronyme anglais de « Heating, Ventilation, Air-Conditioning » (chauffage, ventilation, air conditionné). De façon connue, le HVAC est adapté pour fonctionner au moins dans un mode chauffage, selon lequel il diffuse un air susceptible de réchauffer l'habitacle 1, et dans un mode climatisation, selon lequel il diffuse un air susceptible de rafraîchir l'habitacle 1.

Les aérateurs 11 font partie intégrante du style du véhicule 3. Dans l'exemple de réalisation illustré, l'habitacle 1 comporte un aérateur 11 gauche, agencé à gauche du volant de direction 7, à l'extrémité gauche de la planche de bord 5, un aérateur 11 central et un aérateur 11 droit agencé à l'extrémité droite de la planche de bord 5. Dans l'exemple de réalisation illustré, les aérateurs 11 présentent une forme géométrique rectangulaire. Toutefois, les aérateurs 11 peuvent être ronds, trapézoïdaux, etc. Le nombre et la forme géométrique des aérateurs 11 peuvent également varier d'un modèle de véhicule à un autre et peuvent être adaptés à volonté.

Chaque aérateur 11 est relié au HVAC par l'intermédiaire d'un conduit d'air définissant un corps creux, apte à canaliser un flux d'air depuis une ouverture d'entrée reliée au HVAC jusqu'à une ouverture de sortie ménagée en arrière de la planche de bord 5 et raccordée à l'aérateur 11.

Afin d'assurer la directivité du flux d'air provenant du HVAC, le conduit d'air reçoit à proximité de l'ouverture de sortie des ailettes de déflexion du flux d'air montées mobiles dans le corps creux.

Les aérateurs 11 de l'invention sont motorisés, c'est-à-dire que les ailettes de déflexion sont entraînées en mouvement par l'intermédiaire d'un moteur électrique, de sorte que la directivité du flux d'air peut être pilotée par l'utilisateur, par exemple depuis une interface de commande accessible dans l'habitacle, par exemple depuis l'écran multifonction 9.

L'habitacle 1 comporte en outre des sièges 13 d'une rangée avant 15 et des sièges d'une rangée arrière (non représentés). Les sièges 13 avant sont accessibles par des portes avant-gauche 17g et avant-droite 17d du véhicule 3.

Afin de créer une ambiance chaleureuse et une sensation de confort et de sécurité dans l'habitacle 1, le caractère esthétique des différents éléments de l'habitacle 1 est soigné.

A cet effet, un soin particulier est apporté notamment à la planche de bord 5, à la garniture 19 de pavillon, aux panneaux 21g, 21d de porte, notamment au niveau des matériaux utilisés, du design des éléments intégrés dans l'habitacle 1, etc.

Afin d'augmenter le caractère immersif, l'habitacle 1 comporte un ensemble de génération d'images (non représenté) adapté pour afficher de façon dynamique des images animées sur des surfaces de l'habitacle 1.

Dans une réalisation de l'invention, l'ensemble de générations d'images comporte un projecteur, motorisé ou non motorisé, adapté pour projeter des images sur la planche de bord 5 au niveau d'une zone 23 de la planche de bord 5. L'ensemble de génération d'images peut également comporter plusieurs projecteurs.

Alternativement ou en complément, le projecteur de l'ensemble de générations d'images peut être adapté pour projeter des images sur la garniture 19 de pavillon, dans une zone 25 de la garniture 19 de pavillon.

Alternativement ou en complément, le projecteur de l'ensemble de générations d'images peut être adapté pour projeter des images dans des zones 27g, 27d de l'un et/ou l'autre des panneaux 21g, 21d de porte du véhicule 3.

Les images animées projetées par le projecteur de l'ensemble de générations d'images présentent une bonne définition, offrant un rendu de bonne qualité.

Le revêtement des surfaces sur lesquelles sont projetées les images peut être réalisé dans un matériau lisse, par exemple en tissu ou en cuir.

Le projecteur peut être agencé sur la planche de bord 5 en arrière de l'écran multifonction 9.

Alternativement, le projecteur peut être agencé à proximité d'un rétroviseur central intérieur 29 et projeter sur la planche de bord 5 et/ou sur la garniture 19 de pavillon et/ou sur les panneaux 21g, 21d de porte.

En complément ou en variante de l'utilisation du projecteur, l'ensemble de génération d'images peut comporter une ou plusieurs matrices de diodes électroluminescentes LED portées par la planche de bord 5 et/ou par la garniture 19 de pavillon et/ou par les panneaux 21g, 21d de porte du véhicule 3.

En complément ou en variante de l'utilisation du projecteur et/ou des matrices de LED, l'ensemble de génération d'images peut être adapté pour afficher des images animées sur l'écran multifonction 9 agencé dans l'habitacle 3. Le rendu qualitatif, et donc le caractère immersif, sont ainsi encore augmentés par rapport à l'utilisation du projecteurs et/ou des matrices de LED.

Selon l'invention, l'habitacle 1 comprend un dispositif de synchronisation conçu pour adapter en temps réel les images animées affichées par l'ensemble de génération d'images en fonction du flux d'air pulsé par les aérateurs, créant ainsi une interaction entre le flux d'air pulsé et les images animées affichées.

Dans un exemple de réalisation de l'invention, le dispositif de synchronisation est conçu pour adapter en temps réel les images animées affichées par l'ensemble de génération d'images en fonction de l'orientation du flux d'air pulsé par les aérateurs.

Ainsi, le dispositif de synchronisation pilote l'ensemble de génération d'images de façon à ce que les formes des images animées affichées soient modifiées selon l'orientation du flux d'air pulsé.

Par exemple, lorsqu'un (ou plusieurs) des aérateurs 11 souffle(nt) un flux d'air en direction du panneau de porte 21g de la porte gauche 17g, les images animées affichées sur la zone 27g du panneau de porte 21g sont modifiées de façon à reproduire en temps réel l'effet de l'air qui s'écoule le long de la surface. Par exemple, lorsque l'image animée affichée sur une ou plusieurs des surfaces de l'habitacle est un liquide, le dispositif de synchronisation pilote l'ensemble de génération d'images de façon à produire des ondes de déformation qui se propagent à la surface du liquide en fonction de l'orientation des aérateurs 11.

Dans un exemple complémentaire de réalisation de l'invention, le dispositif de synchronisation est conçu pour adapter les images affichées par l'ensemble de génération d'images en fonction du débit du flux d'air pulsé par les aérateurs 11. Ainsi, lorsque l'image animée affichée sur les surfaces de l'habitacle est un liquide, le dispositif de synchronisation pilote l'ensemble de génération d'images de façon à produire des ondes de déformation d'amplitude plus ou moins importantes en fonction de l'orientation des aérateurs 11 et/ou du débit d'air des aérateurs 11.

Dans un exemple de réalisation de l'invention, le dispositif de synchronisation peut être adapté pour agrémenter les images animées de motifs additionnels affichés en temps réel en fonction du flux d'air pulsé par les aérateurs.

En d'autres termes, le dispositif de synchronisation pilote l'ensemble de génération d'images de façon à créer en temps réel des motifs particuliers sur les images animées affichées en direction desquelles le flux d'air est orienté.

Par exemple, lorsque l'image animée affichée est un liquide, le dispositif de synchronisation peut piloter l'ensemble de génération d'images de façon à produire des éclaboussures depuis la surface du liquide en fonction du flux d'air pulsé par les aérateurs, par exemple en fonction de l'orientation des aérateurs 11, du débit d'air des aérateurs 11, etc.

Par exemple lorsque l'image animée est un feu, l'image ajoutée peut représenter des braises qui sont projetées depuis le feu lorsque l'un des aérateurs 11 est orienté vers l'image animée affichée.

Dans un autre exemple de réalisation de l'invention, le dispositif de synchronisation peut être adapté pour corréler la couleur des images animées affichées en fonction de la température de consigne du flux d'air pulsé par les aérateurs 11.

Par exemple, si un flux d'air frais est diffusé, par exemple un flux d'air présentant une température inférieure à 19°, les images animées affichées peuvent être de couleur froide, présentant des valeurs de longueurs d'ondes comprises entre environ 380nm et environ 570nm, par exemple des couleurs bleues, vertes, mauves, etc., créant ainsi une ambiance évoquant la fraîcheur. De la sorte, l'effet immersif est encore augmenté.

De la même manière, si un flux d'air chaud est diffusé, par exemple un flux d'air présentant une température supérieure à 19°, les images animées affichées peuvent être de couleur chaude, présentant des valeurs de longueurs d'ondes comprises entre environ 570nm et environ 750nm, par exemple des couleurs rouges, oranges, jaunes, etc., créant ainsi une ambiance évoquant la chaleur. De la sorte, l'effet immersif est encore augmenté.

En alternative ou en complément, le dispositif de synchronisation est conçu pour adapter les images affichées par l'ensemble de génération d'images en fonction du mode de fonctionnement retenu du HVAC (mode chauffage, mode climatisation).

Le dispositif de synchronisation peut, dans ce cas, sélectionner dans une banque d'images contenant un ensemble d'images pré-enregistrées, un modèle d'images à afficher en fonction du mode de fonctionnement du HVAC.

Comme il va de soi, la présente invention ne se limite pas aux seules formes de réalisation de cet habitacle de véhicule automobile et de ce véhicule comprenant un tel habitacle, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Habitacle (1) de véhicule (3) automobile comprenant :
- au moins un aérateur (11) motorisé adapté pour diffuser dans ledit habitacle (1) un flux d'air pulsé provenant d'un HVAC, ledit HVAC étant adapté pour fonctionner au moins dans un mode chauffage et dans un mode climatisation, la directivité du flux d'air dudit au moins un aérateur (11) motorisé étant susceptible d'être pilotée depuis une interface de commande accessible dans ledit habitacle (1),
- un ensemble de génération d'images adapté pour afficher de façon dynamique des images animées sur au moins une surface intérieure dudit habitacle (1),
ledit habitacle (1) étant **caractérisé en ce qu'**il comprend un dispositif de synchronisation conçu pour adapter en temps réel lesdites images animées affichées par ledit ensemble de génération d'images en fonction du flux d'air pulsé par ledit au moins aérateur (11).

2. Habitacle (1) selon la revendication 1, **caractérisé en ce que** ledit dispositif de synchronisation est conçu pour adapter les images animées affichées par ledit ensemble de génération d'images en fonction de l'orientation et/ou du débit du flux d'air pulsé par ledit au moins aérateur (11).

3. Habitacle (1) selon l'une des revendications 1 ou 2, **caractérisé en ce que** ledit dispositif de synchronisation est adapté pour agrémenter lesdites images animées affichées de motifs additionnels en fonction du flux d'air pulsé par ledit au moins aérateur (11).

4. Habitacle (1) selon l'une quelconque des revendications 1 à 3, **caractérisé en ce que** ledit dispositif de synchronisation est adapté pour corréler la couleur desdites images animées affichées en fonction de la température de consigne dudit flux d'air pulsé par ledit au moins aérateur (11).

5. Habitacle (1) selon l'une quelconque des revendications 1 à 4, **caractérisé en ce que** ledit dispositif de synchronisation est conçu pour adapter lesdites images animées affichées par ledit ensemble de génération d'images en fonction du mode de fonctionnement retenu dudit HVAC.

6. Habitacle (1) selon l'une quelconque des revendications 1 à 5, **caractérisé en ce que** ledit ensemble de génération d'images comporte au moins un projecteur adapté pour projeter des images animées sur une planche de bord (5) et/ou sur une garniture (19) de pavillon et/ou sur des panneaux (21g, 21d) de porte dudit véhicule (3).

7. Habitacle (1) selon l'une quelconque des revendications 1 à 6, **caractérisé en ce que** ledit ensemble de génération d'images comporte au moins une matrice de LED portée par une planche de bord (5) et/ou sur une garniture (19) de pavillon et/ou sur des panneaux (21g, 21d) de porte dudit véhicule (3).

8. Habitacle (1) selon l'une quelconque des revendications 1 à 7, **caractérisé en ce que** ledit ensemble de génération d'images est adapté pour afficher lesdites images animées sur un écran multifonction (9) agencé dans ledit habitacle (1).

9. Véhicule automobile comprenant un habitacle (1) et un HVAC, **caractérisé en ce que** ledit habitacle (1) est selon l'une quelconque des revendications 1 à 8 et **en ce que** ledit au moins un aérateur (11) est raccordé audit HVAC.
